# EUROPÄISCHE PATENTSCHRIFT

(11) **EP 2 449 509 B1**
(45) Veröffentlichungstag und Bekanntmachung des Hinweises auf die Patenterteilung: **31.12.2014**
(21) Anmeldenummer: 10725805.5
(22) Anmeldetag: 30.06.2010
(51) Int. Cl.: G06K 19/073, G06K 19/07, G06K 19/10, G06K 19/18

(54) **VERFAHREN, TRAGBARER DATENTRÄGER UND SYSTEM ZUM FREIGEBEN EINER TRANSAKTION**
METHOD, PORTABLE DATA CARRIER, AND SYSTEM FOR ENABLING A TRANSACTION
PROCÉDÉ, SUPPORT DE DONNÉES PORTABLE ET SYSTÈME PERMETTANT DE LIBÉRER UNE TRANSACTION

(30) Priorität: 01.07.2009 DE 102009031385
(43) Veröffentlichungstag der Anmeldung: 09.05.2012
(73) Patentinhaber: Giesecke & Devrient GmbH, 81677 München (DE)
(72) Erfinder: RANKL, Wolfgang, 81825 München (DE); BALDISCHWEILER, Michael, 81825 München (DE)
(74) Vertreter: Niedermeier, Peter
(86) Internationale Anmeldenummer: PCT/EP2010/059274
(87) Internationale Veröffentlichungsnummer: WO 2011/000864

(56) Entgegenhaltungen:
- EP-A1- 2 031 548
- WO-A1-2008/092527
- US-A1- 2009 065 575
- Czeskis, Alexei et al: "RFIDs and secret handshakes: defending against ghost-and-leech attacks and unauthorized reads with context-aware communications" Proceedings of the 15th ACM conference on Computer and communications security table of contents Oktober 2008 (2008-10), Seiten 479-490, XP002597239 Alexandria, Virginia, USA ISBN: 978-1-59593-810-7 Gefunden im Internet: URL:http://portal.acm.org/citation.cfm?id= 1455770.1455831&coll=portal&dl=ACM&CFID=52 610930&CFTOKEN=45598658 [gefunden am 2010-08-19]

## Beschreibung

Die Erfindung betrifft ein Verfahren, einen tragbaren Datenträger sowie ein System zum Freigeben einer Transaktion bzw. zum Verhindern von Relay-Angriffen mit Hilfe von Beschleunigungssensoren und einer Struktur auf dem Datenträger.

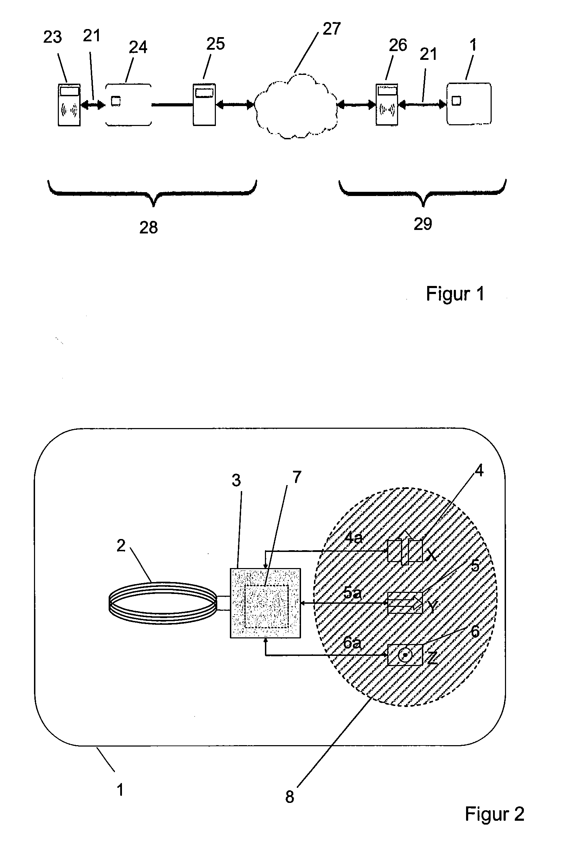

Bei tragbaren Datenträgern, insbesondere kontaktlosen Chipkarten ist es möglich, einen sogenannten Relay-Angriff, auch als Ghost-and-Leech-Attacke oder Wormhole-Attack bezeichnet, durchzuführen. In seiner einfachsten Form besteht dieser Angriff darin, den Kommunikationsbereich einer kontaktlosen Chipkarte auf ein Vielfaches der ursprünglichen Distanz zu erweitern. In der Figur 1 ist zur Verdeutlichung ein möglicher Aufbau skizziert, mit dem ein Relay-Angriff durchgeführt werden kann. Als tragbarer Datenträger 1 ist hier eine kontaktlose Chipkarte eines Kartenbesitzers gezeichnet. Bei dieser Chipkarte wird ohne dessen Wissen bzw. Zustimmung eine Kommunikation aufgebaut und an einem mehrere Meter entfernten Endgerät 23 eine Transaktion durchgeführt. Diese Transaktion ist prinzipiell nicht in ihrer Art beschränkt. Beispielsweise kann eine solche Transaktion eine Bezahltransaktion an einem Bezahlterminal 23 sein.

Dieser Angriff funktioniert deswegen, weil bei heutigen Kontaktloskarten 1 kein Bestätigungstaster vorhanden ist und die Karte 1 lediglich an das Endgerät 23 zum Bezahlen gehalten werden muss. Diese Eigenschaft macht sich nun der Angreifer zunutze, indem er sich mit einem Spezialterminal 26, auch als Leech-Terminal bezeichnet, nahe an der "echten" kontaktlosen Chipkarte 1 aufhält und die Nahfeldkommunikation 21 so verstärkt, dass sie über mehrere Meter Entfernung immer noch funktioniert. Damit kann der Angreifer mit einem Spezial-Datenträger 24, auch als Geist oder englisch ghost bezeichnet, in einiger Entfernung gewissermaßen mit der "echten" Chipkarte 1 bezahlen. Dieser Angriff lässt sich erweitern, indem die Nahfeldkommunikation 21 nicht nur über einige wenige Meter verstärkt, sondern komplett über ein separates Netzwerk 27 geleitet wird. Der Angriff könnte sich in der Praxis beispielsweise folgendermaßen abspielen: Der erste Angreifer baut in einem Hallenbad oder Fitnessstudio mit einer kontaktlos arbeitenden Chipkarte in einem der Spinde eine Kommunikation 21 auf. Kann er eine kontaktlose Chipkarte 1 entdecken, verbindet er diese über ein Endgerät 26, beispielsweise ein Mobiltelefon, mittels Netzwerk 27 an ein Gateway 25 eines zweiten Angreifers, der nahezu beliebigweit entfernt mit dem Geist-Datenträger 24 zum Einkaufen geht. Die Nahfeldkommunikation 21 zwischen dem Bezahlterminal 23 und der "echten" Chipkarte 1 wird dabei über das Mobiltelefon 26 verlängert und läuft wie bei einer "echten" Transaktion ab.

Auf kryptografischem Wege lässt sich gegen diese Art von Angriff kein Schutz aufbauen. Zur Lösung dieses Problems könnte beispielsweise ein Taster auf der Kontaktloskarte 1 angebracht werden, der bei jeder Transaktion zur Freigabe der Transaktion gedrückt werden muss. Der Taster als ein mechanisches Element nutzt sich über die Jahre im Gebrauch stark ab, sodass die Funktionalität des Tasters nicht dauerhaft gewährleistet ist. Alternativ könnte man die kontaktlose Chipkarte 1 auch in einem abgeschirmten Portemonnaie aufbewahren. Beide Ansätze verhindern recht zuverlässig eine unbemerkte Kommunikation mit der Kontaktloskarte 1, haben sich aber als alltagsuntauglich herausgestellt. Als ergänzende Abwehrmaßnahme wäre auch denkbar, das Zeitverhalten jeder Transaktion durch das Bezahlterminal 23 zu analysieren, um so die zeitliche Verzögerung zu erkennen, die durch eine Weiterleitung über das Netzwerk 27 verursacht wird. Die Zuverlässigkeit dieser Maßnahme hängt allerdings stark von der Qualität des Netzwerkes 27 ab, der mit der laufenden technischen Weiterentwicklung allerdings ständig besser wird.

In der Publikation "RFIDs and secret handshakes: Defending Against Ghostand-Leech Attacks and Unauthorized Reads with Context-Aware Communications" der Autoren Czeskis et.alia, veröffentlicht im "Proceedings of the 15th ACM conference on Computer and communications security table of contents" im Oktober 2008 werden Maßnahmen zur Verhinderung von Relay-Angriffe beschrieben. Ein Vorschlag ist die Verwendung und Auswertung von Beschleunigungssensoren in einen Datenträger.

Sowohl in der EP 2 031548 A1 als auch in der US 2009/0065575 A1 bzw. WO 2008/092527 A1 werden Relay-Angriffen in einem RFID-Umfeld verhindert, indem vor der Ausführung einer Transaktion ein Beschleunigungssensor ausgelesen wird.

Derartige Maßnahmen bedingen ein Bewegen des gesamten Datenträgers zur Transaktionsfreigabe, was für einen Benutzer derartiger RFID-System als umständlich empfunden wird.

Aufgabe der hier vorliegenden Erfindung ist es daher, ein Verfahren, ein System und einen tragbaren Datenträger zu zeigen, mit welchem die Freigabe einer Transaktion zwischen einem tragbaren Datenträger und einem Endgerät kostengünstiger, sicherer und einfacher erfolgt. Die bestehende Infrastruktur zwischen Datenträgern und Endgeräten sollte dabei möglichst bestehen bleiben können.

Die Aufgabe wird mit allen unabhängig nebengeordneten Patentansprüchen gelöst. Vorteilhafte Ausgestaltungen sind in den jeweils abhängigen Ansprüchen beschrieben.

Erfindungsgemäß wird die Aufgabe durch ein Verfahren zum Freigeben einer Transaktion zwischen einem tragbaren Datenträger und einem Endgerät gelöst. Dazu wird der tragbare Datenträgers zunächst in ein elektromagnetisches Feld eingebracht. Das EM-Feld ist dabei vom Endgerät erzeugt. Das EM-Feld dient als Energieversorgung und zur Aktivierung des tragbaren Datenträgers. Zunächst werden keine Transaktionen zwischen dem tragbaren Datenträger und dem Endgerät freigegeben. Beziehungsweise werden zumindest Transaktionen nicht freigegeben, die sicherheitsrelevante Informationen oder Daten beinhalten. Im nächsten Verfahrensschritt werden mechanische Schwingungen mit Hilfe einer Struktur auf dem Datenträger erzeugt. Diese mechanischen Schwingungen werden in der Folge im tragbaren Datenträger mittels Beschleunigungssensor erfasst. Anschließend wird das Ausgangssignal des Beschleunigungssensors hinsichtlich charakteristischer Eigenschaften der mechanischen Schwingung ausgewertet bzw. analysiert. Sobald durch das Auswerten des Ausgangssignals eine charakteristische Eigenschaft der Schwingung erkannt wurde, erfolgt das Freigeben der Transaktion durch den tragbaren Datenträger. Alternativ zum Freigeben von Transaktionen kann das Verfahren eingesetzt werden, um einen gesicherten Datenbereich im tragbaren Datenträger freizugeben oder sicherheitskritischen Informationen zwischen Endgerät und Datenträger zu übertragen.

Ein tragbarer Datenträger im Sinn der Anmeldung ist prinzipiell nicht in seiner Form und Ausgestaltung vorgegeben. Insbesondere ist als ein tragbarer Datenträger eine Chipkarte, Smart Card, Kontaktloskarte oder allgemein ein Sicherheitstoken beispielsweise mit Identifikationsfunktion, zu verstehen. Alternative Ausgestaltungen, beispielsweise als Massenspeicherkarte, zu Beispiel µSD-Karte sind ebenfalls denkbar. Weiterhin ist im Sinn der Anmeldung ein elektronischer Pass oder andersartiges Identifikationsmedium verstanden, welches sicherheitskritische Informationen enthält, die nicht allgemein aus dem Datenträger ausgelesen werden sollen. Im weiteren Sinn ist der tragbare Datenträger ein Mobiltelefon, mit dem Transaktionen, beispielsweise über eine Nahfeldkommunikation mit einem Endgerät durchgeführt werden können. Das Mobiltelefon als tragbarer Datenträger weist dabei eine Nahfeldkommunikationsschnittstelle auf.

Als Endgerät ist jede Art von Kommunikationsgerät zu verstehen, mit der der tragbare Datenträger insbesondere kontaktlos kommunizieren kann. Eine Kommunikation erfolgt beispielhaft mit einem Lesegerät, englisch terminal, nach ISO/IEC 14443 standardisiert. Das Endgerät ist zum Beispiel ein Point of Sale Terminal, kurz POS-Terminal, oder ein Bezahlautomat mit Nahbereichskommunikationsschnittstelle.

Als eine Transaktion wird im Sinn der Anmeldung eine logische Folge von Operationen verstanden. Eine Transaktion ist beispielsweise ein Bezahlvorgang zwischen einem tragbaren Datenträger und einem Endgerät über eine Kontaktlosschnittstelle. Eine Transaktion ist alternativ auch das Auslesen von sicherheitskritischen Informationen, beispielsweise PIN Nummern, persönlichen Daten oder allgemeine Geheimnisse, wie TAN-Nummern, Passwörtern und der gleichen mehr.

Im Sinne der Anmeldung wird ein Beschleunigungssensor als ein Sensor verstanden, der die Beschleunigung eines Körpers ermittelt, beispielsweise indem die auf eine Testmasse wirkende Trägheitskraft bestimmt wird. Ein Beschleunigungssensor misst lineare Eigenbewegungen und Beschleunigungen und löst anschließend anhand des Messergebnisses Schaltvorgänge abhängig von der Eigenbewegung im Raum aus. Eine Art von Beschleunigungssensor ist ein Rotationssensor, der die eigene Drehbewegung um eine Achse ermittelt. Lediglich beispielhaft seien hier der Ein-Achsen-Rotationssensor LY530AL und der 3-Achsen-Beschleunigungssensor LIS344ALH der Firma ST Microelectronics als diskrete elektronische Bauteile genannt.

Durch das erfindungsgemäße Verfahren wird auf einfache Art und Weise unterbunden, dass ein tragbarer Datenträger eine Transaktion mit einem Endgerät durchführt, ohne dass die Transaktion vorher freigegeben worden ist. Mit diesem erfindungsgemäßen Verfahren wird sehr effektiv ein Relay-Angriff der eingangs beschriebenen Art unterbunden. Dieses Verfahren ist dabei sehr kostengünstig, alltagstauglich und zuverlässig.

In einer vorteilhaften Ausgestaltung wird der tragbare Datenträger durch das mechanische Anregen in Eigenschwingung gebracht. Anschließend wird diese Eigenschwingung des Datenträgers in Form von Beschleunigung mittels des Beschleunigungssensors erfasst und ausgewertet wird. Der Vorteil in dieser Ausgestaltung ist darin zu sehen, dass selbst bei minimaler Anregung mit mechanischer Schwingung eine Beschleunigung des Datenträgers gut auswertbar ist.

Die charakteristische Eigenschaft ist bevorzugt die Zeitdauer, die Frequenz und/oder die Amplitude der mechanischen Schwingung. Demzufolge wird eine Transaktion nur freigegeben wenn ein Sollwert der charakteristischen Eigenschaft der Schwingung überschritten ist, andernfalls wird die Transaktion nicht freigegeben. Alternativ wird in vorteilhafter Weise überprüft, ob eine charakteristische Eigenschaft der Schwingung in einem fest definierten Toleranzbereich ist. Diese charakteristischen Eigenschaften lassen sich beispielsweise mit einer Auswerteeinheit sehr leicht und sicher erfassen.

In einer bevorzugten Ausführung schwanken die erzeugten mechanischen Schwingungen in der Frequenz. Alternativ oder zusätzlich sind mehrere mechanische Schwingungen überlagert. Das Schwanken der Frequenzen und/oder die Schwingungsüberlagerung werden als charakteristische Eigenschaft im tragbaren Datenträger ausgewertet. Die Auswerteeinheit ermittelt anhand dieser Schwankungen und Überlagerungen der Frequenz, ob die richtige bzw. echte Struktur auf dem Datenträger vorhanden ist und entscheidet über die Freigabe der Transaktion. Somit ist der Schutz vor Relay-Angriffen wesentlich erhöht.

In einer alternativen Ausgestaltung werden die mechanischen Schwingungen erzeugt, indem der Datenträger mit seiner Struktur an einer Außenfläche des Endgeräts bewegt bzw. gerieben wird. Die durch die Reibung entstehenden Schwingungen werden als Beschleunigungen im tragbaren Datenträger erfasst und ausgewertet.

Ebenfalls erfindungsgemäß vorgesehen ist ein tragbarer Datenträger zur Datenübertragung mit einem Endgerät. Der Datenträger weist einen Kartenkörper auf. Im Kartenkörper ist wiederum ein integrierter Schaltkreis eingebracht. Des Weiteren ist im Inneren an einer Oberseite des Kartenkörpers ein Beschleunigungssensor angebracht, wobei der Beschleunigungssensor den integrierten Schaltkreis Ausgangssignale bereitstellt. Auf der Oberseite des Kartenkörpers ist eine Struktur aufgebracht. Mittels dieser Struktur sind mechanische Schwingungen erzeugbar, wodurch die Datenübertragung freigebbar ist, also freigegeben werden kann.

Fährt nun der Besitzer beispielsweise mit einem Fingernagel oder einem Stift über die Struktur, so werden mechanische Schwingungen erzeugt. Diese Schwingungen werden im Inneren des Kartenkörpers detektiert, analysiert und ausgewertet. Die Freigabe einer Transaktion erfolgt, sobald die charakteristischen Eigenschaften der Schwingung über einen Sollwert sind oder innerhalb eines definierten Toleranzbereiches sind. Ist der tragbare Datenträger ein Mobiltelefon, so befindet sich die Struktur bevorzugt außen am Mobiltelefongehäuse. Die Erfassung, Analyse und Auswertung der somit erzeugten Beschleunigungen erfolgt entweder in einer SIM-Karte im Datenträger oder im Mobiltelefon selbst.

Die Struktur ist beispielsweise mittels Laser, Fräse oder Prägung irgendwo in die Oberfläche des Kartenkörpers eingebracht. Bevorzugt ist der Kartenkörper laminiert und die Struktur auf das Laminat geprägt. Auf diese Weise ist eine Struktur sehr einfach und kostengünstig realisierbar.

In einer bevorzugten Ausgestaltung ist die Struktur oberhalb des Beschleunigungssensors angeordnet. Dadurch können die erzeugten mechanischen Schwingungen ideal erfasst werden.

Prinzipiell kann der Beschleunigungssensor überall im Kartenkörper platziert werden. Bevorzugt ist der Beschleunigungssensor in einer Aussparung des Kartenkörpers an der Oberseite des Kartenkörpers angebracht, sodass die mechanischen Schwingungen sehr gut erfasst werden können.

In einer alternativen Ausgestaltung ist der Beschleunigungssensor im integrierten Schaltkreis eingebracht, sodass die Herstellung des erfindungsgemäßen tragbaren Datenträgers kostengünstig ist.

Denkbar ist auch eine individuelle Platzierung des Beschleunigungssensors pro Datenträger irgendwo im Kartenkörper. Aufgrund der unterschiedlichen Platzierung werden gleiche mechanische Schwingungen unterschiedlich vom Beschleunigungssensor erfasst, da insbesondere der Kartenkörper selbst eine Dämpfung der mechanischen Schwingungen verursacht. Diese unterschiedlichen Amplituden der Schwingungen können als charakteristische Eigenschaft ausgewertet werden und ein Freigabekriterium sein.

In einer bevorzugten Ausgestaltung ist die Struktur individuell pro Datenträger gestaltet, sodass die mittels der Struktur erzeugbaren Schwingungen individuell pro Datenträger sind. Eine derartige Individualisierung ist beispielsweise die Formgestaltung der Struktur, z.B. Kreis, Ellipse, Dreieck oder Rechteck.

Darüber hinaus wird erfindungsgemäß vorgeschlagen, dass die Struktur Rillen aufweist oder aus Rillen besteht. Diese Rillen sind als Linien, Kreise oder Wellen angeordnet und bilden die Struktur. Es ist erfindungsgemäß vorgesehen, dass die Rillen in einer Struktur unterschiedlich tief sind und die Rillen über die Struktur verteilt unterschiedliche Abstände zueinander aufweisen.

Durch all diese Maßnahmen werden Schwankungen und Überlagerungen der charakteristischen Eigenschaften der erzeugten mechanischen Schwingungen erhalten. Es ist bevorzugt vorgesehen, pro Datenträger die Strukturen individuell auszugestalten. Dadurch ist eine Individualisierung des Datenträgers erreicht, eine Freigabe erfolgt nur, wenn für den "originalen" Kartenkörper mit der jeweils individuellen Struktur mechanischen Schwingungen, in festgelegten Toleranzbereichen erfasst und ausgewertet werden können.

Schließlich wird erfindungsgemäß ein System zum Verhindern eines Relay-Angriffs vorgeschlagen. Das System umfasst einen tragbaren Datenträger der bereits beschriebenen Art und ein Endgerät, wobei durch die Struktur auf dem Datenträger mechanische Schwingungen erzeugt werden und die Transaktion zwischen Datenträger und Endgerät erst bei Überschreitung eines Sollwerts einer charakteristischen Eigenschaft der mechanischen Schwingung freigegeben wird.

Der Sollwert könnte in einem Datenspeicher im Datenträger abgelegt sein und während der Auswertung der charakteristischen Eigenschaft der Schwingung abgerufen werden. Alternativ könnte ein fest definierter Toleranzbereich, beispielsweise eine prozentuale Abweichung vom erfassten Wert der charakteristischen Eigenschaft, im Datenspeicher abgelegt sein.

Nachfolgend werden Ausführungsbeispiele der Erfindung anhand von Figuren beispielhaft beschrieben. Hierbei werden gleiche Bestandteile der Figuren mit gleichen Bezugszeichen versehen. Die Figuren sind nicht maßstabstreu, insbesondere können einzelne Teile übertrieben groß und stark vereinfacht dargestellt sein.

Es zeigen:
- Fig. 1: Skizzenhafte Veranschaulichung eines Relay-Angriffs über ein zusätzliches Netzwerk,
- Fig. 2: Blockschaltbild eines erfindungsgemäßen tragbaren Datenträgers mit Struktur zum Freigeben einer Transaktion in Draufsicht
- Fig. 3: Blockschaltbild eines alternativen tragbaren Datenträgers im Vergleich zu Figur 2 in Draufsicht und Querschnitt
- Fig. 4: Skizzenhafte Darstellung der Erzeugung mechanischer Schwingungen an einem erfindungsgemäßem Datenträger mit Fingernagel
- Fig.5: Beispielhaftes Spannungs-Zeit Diagramm der Beschleunigungssensorausgangssignalen in X, Y und Z-Richtung beim Erzeugen von mechanischen Schwingungen im Datenträger mittels Fingernagelbewegung über die Struktur
- Fig. 6: Detailliertes Blockschaltbild eines integrierten Schaltkreises in einem tragbaren Datenträger gemäß Figur 2 oder 3
- Fig. 7: Ablaufdiagramm eines erfindungsgemäßen Verfahrens zur Freigabe einer Transaktion zwischen einem tragbaren Datenträger und einem Endgerät
- Fig.8: Erfindungsgemäßes System zum Verhindern eines Relay-Angriffs

Die für diese Erfindung wesentlichen Erläuterungen zu Figur 1 können der Beschreibungseinleitung entnommen werden.

In der Figur 2 ist ein Blockschaltbild eines erfindungsgemäßen tragbaren Datenträgers 1 mit einer Struktur 8 in Draufsicht dargestellt. Der tragbare Datenträger 1 ist hier in Form einer Chipkarte, englisch smart card, dargestellt. Zur Kommunikation mit einem Endgerät (hier nicht dargestellt) ist in den Körper des Datenträgers 1 eine Antenne 2 zur Nahfeldkommunikation 21, englisch Near Field Communication NFC, eingebracht. Die Antenne 2 ist mit Antennenanschlüssen mit einem integrierten Schaltkreis 3 elektrisch gekoppelt. Der integrierte Schaltkreis 3 weist eine erfindungsgemäße Freigabevorrichtung 7 auf. Weiterhin sind im tragbaren Datenträger 3 Beschleunigungssensoren 4,5,6 eingebracht. Der Beschleunigungssensor 4 erfasst dabei Beschleunigungen in X- Richtung, der Sensor 5 Beschleunigungen in Y-Richtung und der Beschleunigungssensor 6 in Z-Richtung. Die Ausgangssignale 4a, 5a und 6a der Beschleunigungssensoren 4,5,6 werden dem integrierten Schaltkreis 3 zugeführt.

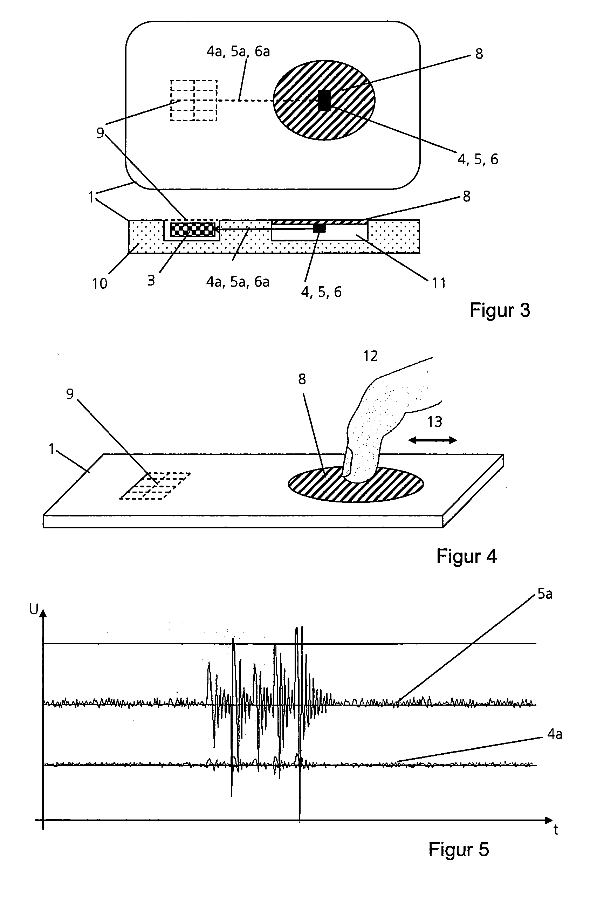

In Figur 3 ist ein alternativer tragbare Datenträger 1 in Querschnitt und Draufsicht in Blockschaltbild dargestellt. Im Unterschied zu Figur 2 weist der Datenträger 1 ein Kontaktfeld 9 auf. Das Kontaktfeld 9 ist optional und nicht erfindungswesentlich. Im Querschnitt der Figur 3 ist zu erkennen, dass der Kartenkörper 10 zwei Aussparungen 11 aufweist. In eine erste Aussparung ist der integrierte Schaltkreis 3 mit Freigabevorrichtung 7 eingebracht. In die zweite Aussparung sind Beschleunigungssensoren 4, 5, 6 eingebracht. Integrierter Schaltkreis 3 und Beschleunigungssensoren 4, 5, 6 können auch Alternativ in den Kartenkörper 10 eingebracht sein. Der Kartenkörper 10 ist laminiert. Die Anzahl der Beschleunigungssensoren kann alternativ auch höher oder niedriger als in diesem Beispiel gezeigt. Vorrangig wird in diesen Ausführungsformen ein 3-Achsen Beschleunigungssensor verstanden, der als ein Bauteil oder Modul in drei verschiedenen Richtungen beschleunigungssensitiv ist.

In Figur 3 ist Beschleunigungssensor 4, 5, 6 in die Aussparung geklebt. Als Kleber sind für die Herstellung von Chipkarten übliche Klebmittel vorgesehen. Oberhalb des Sensors 4, 5, 6 auf der Oberseite des Kartenkörpers 10 ist die Struktur 8 angeordnet. Durch diese Anordnungen werden die mit der Struktur erzeugten mechanischen Schwingungen optimal erfasst. Die Platzierung der Struktur 8 ist in Figur 3 zentral. Sie ist in alternativen Ausgestaltungen frei wählbar und erzeugt somit auch ein individuelles Gestaltungskriterium und führt darüber hinaus zu einem individuellen Freigabekriterium. Die Beschleunigungssignale 4a, 5a, 6a werden dem integrierten Schaltkreis 3 zugeführt. Eine vollständige Integrierung der Sensoren 4, 5, 6 in den integrierten Schaltkreis 3 ist alternativ möglich. Eine derartige Variante spart platz und reduziert Herstellungskosten.

Die Struktur ist in den Figuren 2 und 3 in Form einer Ellipse ausgeführt. Jede andere geometrische Form, beispielsweise Kreis, Dreieck, Rechteck ist ebenfalls möglich und verursacht entsprechend individuelle mechanische Schwingungen, die als Freigabekriterium herangezogen werden können. Die Struktur der Figuren 2 und 3 weist Rillen auf. In diesem Ausführungsbeispiel sind die Rillen als schräge Linien angeordnet, gleich tief und haben den gleichen Abstand.

Eine individuelle Struktur 8 für jeden einzelnen Datenträger 1 ist auch denkbar, die Rillen sind hierbei unterschiedlich tief und verursachen somit unterschiedliche Amplitudenhöhen bei den Schwingungen. Die Rillen werden beispielsweise mit einem Laser, einer Fräse oder mittels Prägung in den Kartenkörper 10 eingebracht. Wird der Abstand zwischen den Rillen unterschiedlich ausgestaltet, so werden unterschiedliche Schwingfrequenzen erzeugt und überlagert. Eine Berechnung und anschließende Auswertung des Spektrums, beispielsweise mittels FFT, wird als charakteristische Eigenschaft der mechanischen Schwingungen analysiert und als Freigabekriterium verwendet.

Wird der tragbare Datenträger 1 gemäß Figur 2 oder 3 in ein von einem Endgerät erzeugten elektromagnetischen Feld, kurz EM-Feld, eingebracht, entnimmt die Antenne 2 dem erzeugten EM-Feld Energie und stellt diese Energie dem integrierten Schaltkreis 3 zur Verfügung. Erfindungsgemäß ist vorgesehen, beim Eintritt und Aufenthalt des Datenträgers 1 die Ausgangssignale 4a, 5a, 6a der Beschleunigungssensoren 4, 5, 6 hinsichtlich einer charakteristischen Eigenschaft auszuwerten und daraus die Entscheidung zur Freigabe oder Nichtfreigabe einer Transaktion zwischen Datenträger 1 und Endgerät 23 abzuleiten. Der integrierte Schaltkreis 3 gibt also solange keine Freigabe einer Transaktion mit dem Endgerät, bis die Beschleunigungssensoren 4, 5, 6 Beschleunigungen in der Form erfassen und als Ausgangssignale 4a, 5a, 6a dem integrierten Schaltkreis 3 zuführen, sodass eine charakteristische Eigenschaft von mechanischer Schwingung festgestellt worden ist.

In den Figuren 2 und 3 sind die Beschleunigungssensoren 4, 5, 6 getrennt vom Schaltkreis 3 in den Körper des tragbaren Datenträgers 3 eingebracht. Alternativ sind die Beschleunigungssensoren 4, 5, 6 im integrierten Schaltreis 3 eingebracht. Alternativ kann nur ein Beschleunigungssensor oder wenigstens ein Rotationssensor (bildlich nicht dargestellt) anstelle der drei Beschleunigungssensoren 4, 5, 6 vorgesehen sein.

Der Datenträger 1 ist derart beschaffen, dass er bei Anregen mittels mechanischer Schwingung eine ausreichend detektierbare Beschleunigung im Inneren des Datenträgerkörpers durchführt.

In Figur 4 ist eine dreidimensionale Abbildung des erfindungsgemäßen Datenträgers 1 dargestellt. Schemenhaft sind das Kontaktfeld 9 sowie die erfindungsgemäße Struktur 8 auf der Oberseite des Kartenkörpers 10 gezeigt. Ein Benutzer, der eine Transaktion mit dem Endgerät 23 freigeben möchte, fährt mit seinen Fingernagel 12 über die Struktur 8. Dadurch werden mechanische Schwingungen erzeugt, die von den Bewegungssensoren 4, 5, 6 erfasst werden. Eine Auswertung der mechanischen Schwingungen hinsichtlich charakteristischer Eigenschaften erfolgt im integrierten Schaltkreis 3.

Als auswertbare charakteristische Eigenschaften sind folgende Parameter der mechanischen Schwingung beispielhaft erwähnt:
a) Die Amplitude der mechanischen Schwingung. Die Amplitude kann beeinflusst werden durch die Platzierung des Bewegungssensors 4, 5, 6 im Kartenkörper 10, der Dicke des Kartenkörpers zwischen der Struktur 8 und dem Bewegungssensor 4,5, 6 sowie der Tiefe der Rillen der Struktur 8.
b) Die Frequenz der mechanischen Schwingung. Die Frequenz ist beeinflussbar, indem die Abstände der Rillen in der Struktur 8 zueinander unterschiedlich sind, die Anordnung der Rillen in der Struktur inhomogen ist und die Größe der Struktur 8 zwischen den einzelnen Datenträgern 1 unterschiedlich ist.
c) Die Zeitdauer aller mechanischen Schwingungen. Die Zeitdauer kann variieren aufgrund der Größe und der Form der Struktur 8.
d) Die Frequenzanteile der mechanischen Schwingung. Durch Berechnen des Spektrums der auszuwertenden Beschleunigungssignale 4a, 5a und 6a werden überlagerte und schwankende Frequenzen aufgrund unterschiedlicher Rillenabstände innerhalb einer Struktur 8 erfasst. Mit Hilfe einer FFT kann das Vorhandensein unterschiedlicher Frequenzen im Schwingungsmuster der mechanischen Schwingungen überprüft werden.

Diese charakteristischen Eigenschaften können für eine erforderliche Freigabe auch beliebig kombiniert werden. Die Struktur 8 und die damit verbundene Auswertung der charakteristischen Eigenschaften der erzeugten mechanischen Schwingungen ist für ein einfaches Freigeben der Transaktion auf allen Datenträgern 1 gleich ausgestaltet. Hierbei wird ausschließlich darauf geachtet, dass ein Benutzer mechanische Schwingungen erzeugt, sodass für eine Transaktion ein aktives Eingreifen des Benutzers erforderlich ist. Ein Relay-Angriff ist somit unterbunden. Alternativ kann eine Freigabe auch derart gestaltet werden, dass jeder Datenträger 1 eine individuelle Struktur 8 erhält. Diese Struktur variiert dann in Form, Größe, Anzahl der Rillen, Tiefe der Rillen, Anordnung der Rillen, Dicke des Kartenkörpers 10 zwischen Beschleunigungssensor 4, 5, 6 und Struktur 8, Platzierung von Struktur 8 auf dem Kartenkörper, Platzierung des Beschleunigungssensor 4, 5, 6 innerhalb des Kartenkörpers und vieles mehr. Eine Auswertung der Signale 4a, 5a, 6a aller oder einiger dieser charakteristischen Eigenschaften der mechanischen Schwingung ergibt, ob eine Freigabe erfolgt oder nicht.

Ein Beispiel für die Sensormesswerte einer gepulsten zirkularen Vibration ist in Figur 5 dargestellt. Die Messkurven repräsentieren dabei die Schwingungsachsen X, Y entsprechend den Signalen 4a, 5a, der Beschleunigungssensoren 4, 5. Erfindungsgemäß ist vorgesehen, dass der Datenträger 1 die Schwingungsmuster der erfassten Schwingungen hinsichtlich zumindest einer der erwähnten charakteristischen Eigenschaft analysiert und auswertet. Befinden sich die Messwerte innerhalb eines Toleranzbereiches eines erwarteten Bereiches, so ist vorgesehen dass die vorgesehenen Transaktion mit dem Datenträger 1 freigegeben wird. Alternativ kann auch der Zugriff auf einen ausgewählten Speicherbereich des Datenträgers 1 und / oder die weitere Kommunikation zwischen dem Endgerät 23 und dem Datenträger 1 freigegeben werden. Der Toleranzbereich kann auch eine Sollwertschwelle eines der charakteristischen Eigenschaften der mechanischen Schwingung sein, die zur Freigabe überschritten werden muss.

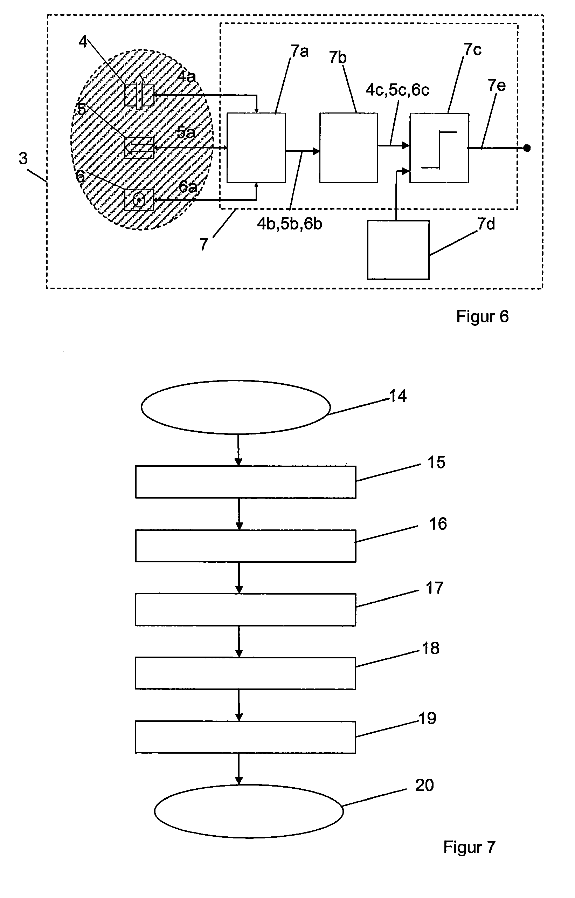

Ein detailliertes Blockschaltbild eines im tragbaren Datenträger 1 eingebrachten Schaltkreises 3 der vorigen Figuren 2, 3, 4 ist in der Figur 6 dargestellt. Hierbei sind die Sensoren 4, 5, 6 ebenfalls innerhalb des integrierten Schaltkreises 3 angeordnet. Die Ausgangssignale 4a, 5a, 6a der Sensoren 4, 5, 6 werden der Auswerteeinheit 7a zugeführt. Eine Auswertung der Signale kann beispielsweise die Amplitudenhöhe, die Zeitdauer oder die Frequenz sein. Prinzipiell können diese ausgewerteten Signale direkt der Vergleichseinheit 7c zugeführt werden, um dort ggf. mit aus einem Sollwertspeicher 7d im Datenträger 1 abgelegten Sollwert verglichen werden. Bei Überschreitung des Sollwertes erfolgt die Freigabe der Transaktion durch ein Freigabesignal 7e. Alternativ, so wie in Figur 6 dargestellt werden die ausgewerteten Signale zunächst einer Berechnungseinheit 7b zugeführt. Diese Berechnungseinheit 7c berechnet die Signale 4c, 5c, 6c. Als Berechnung ist beispielsweise eine FFT-Analyse aus den ausgewerteten Signalen 4b, 5b, 6b vorgesehen.

In einer zweiten Ausführungsform der Erfindung ist vorgesehen, dass der Datenträger 1 durch mechanische Schwingungen angeregt wird, indem die Struktur 8 des Datenträgers 1 an einer Oberseite des Endgeräts 23 gerieben wird. Dadurch entstehende mechanische Schwingungen bzw. die Eigenbeschleunigung des Datenträgers 1 werden von den Beschleunigungssensoren 4, 5, 6 erfasst und ausgewertet.

Alternativ ist der Datenträger 1 ein Mobiltelefon mit NFC-Schnittstelle. Ein Benutzer des Mobiltelefons, der beispielsweise eine Bezahltransaktion durchführen möchte, muss diese nun nicht mit der Tastatur seines Mobiltelefons bestätigen, sondern die Freigabe der Transaktion erfolgt, indem er mechanische Schwingungen mit der, am Mobiltelefongehäuse angebrachten, Struktur 8 erzeugt. Die Freigabe der Transaktion erfolgt, sobald charakteristische Eigenschaften der Schwingungen im Mobiltelefon erfasst und ausgewertet worden sind. In dieser Anmeldung synonym verwendet werden die Begriffe Mobiltelefon, PDA, Kommunikationsgerät, Organizer, elektronischer Kalender und der gleichen.

In Figur 7 ist ein beispielhaftes Ablaufdiagramm für ein erfindungsgemäßes Verfahren zum Freigeben einer Transaktion zwischen Endgerät 23 und einem tragbaren Datenträger 1 dargestellt. Durch Bereitstellen 14 eines EM-Feld vom Endgerät 23 wird der tragbare Datenträger 1 elektrisch aktiviert 15. Durch die Struktur 8 auf dem Datenträger 1 werden mechanische Schwingungen erzeugt. Anschließend erfolgt das Erfassen 17 der Beschleunigung in X, Y, Z - Richtung mittels der Sensoren 4, 5, 6. Die Beschleunigungen werden durch Auswerten und/oder Berechnen 18 der Beschleunigungssensorausgangssignale 4a, 5a, 6a ermittelt. Im Schritt 19 folgt das Vergleichen der Signalwerte 4c, 5c, 6c hinsichtlich charakteristischer Eigenschaften, wie beispielsweise Frequenz, Amplitude, Zeitdauer, Frequenzschwankung, Frequenzüberlagerung, Frequenzanteile oder der gleichen mehr. Im Verfahrensschritt 20 erfolgt abschließend das Freigeben der Transaktion bei Überschreiten eines Sollwertes bzw. bei Einhalten eines definierten Toleranzbereichs der berechneten Werte der charakteristischen Eigenschaften der mechanischen Schwingungen. Sollwerte und Toleranzbereich sind dabei bevorzugt in einem Speicherbereich 7d des Datenträgers 1 abgelegt.

Das erfindungsgemäße Verfahren ist bevorzugt zumindest teilweise in Form einer Computersoftware im integrierten Schaltkreis 3 implementiert. Der integrierte Schaltkreis 3 führt dann die entsprechenden Verfahrensschritte als implementierte Programmschritte aus.

Alternativ zum Freigeben einer Transaktion ist auch das Freigeben eines sicheren Datenspeichers oder das Übermitteln sicherheitskritischer Informationen, beispielsweise von Geheimnissen wie PIN oder TAN-Nummern denkbar.

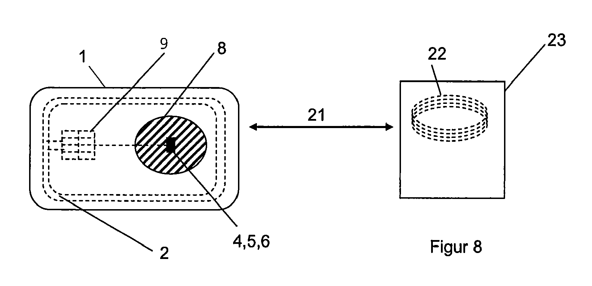

In der Figur 8 ist ein erfindungsgemäßes System zum Freigeben einer Transaktion zwischen einem tragbaren Datenträger 1 und einem Endgerät 23 dargestellt. Der Datenträger 1 entspricht hierbei dem in Figur 2, 3 und 4 beschriebenen Datenträger 1. Das Endgerät 23, englisch terminal, ist in seiner Funktion nicht beschränkt und ist beispielsweise ein Lesegerät, POS-Terminal oder Bezahlterminal. Das Endgerät 23 weist eine Antenne 22 auf. Somit findet eine Nahfeldkommunikation 21 mittels der Antennen 2 und 22 kontaktlos statt. Diese Kommunikation ist beispielsweise mittels ISO/IEC 14443 standardisiert. Der Datenträger 1 weist die Struktur 8 auf, mit der mechanische Schwingungen beispielsweise mit einem Fingernagel eines Benutzers, einem Stift oder durch Reiben des Datenträgers 1 an dem Endgerät 23 erzeugt werden. Die mechanische Schwingung wird anschließend nach dem bereits beschriebenen Verfahren hinsichtlich der erwähnten charakteristischen Eigenschaften ausgewertet, berechnet und/oder analysiert. Eine Freigabe der Transaktion erfolgt erst, wenn die mechanischen Schwingungen einen Sollwert einer charakteristischen Eigenschaft überschreiten oder in einem fest definierten Toleranzbereich, beispielsweise ±5%, sind.

## Patentansprüche

1. Verfahren zum Freigeben einer Transaktion zwischen einem tragbaren Datenträger (1) und einem Endgerät (23) mit den Verfahrensschritten:
a) Einbringen des tragbaren Datenträgers (1) in ein elektromagnetisches Feld, wobei das Endgerät (23) das elektromagnetische Feld erzeugt und Versorgen des tragbaren Datenträgers (1) mit Energie aus dem elektromagnetischen Feld,
b) Erzeugen mechanischer Schwingungen mit Hilfe einer Oberflächenstruktur (8) auf dem Datenträger (1),
c) Erfassen der mechanischen Schwingungen im tragbaren Datenträger (1) mittels Beschleunigungssensor (4, 5, 6),
d) Auswerten eines Ausgangssignals (4a, 5a, 6a) des Beschleunigungssensors (4, 5, 6) hinsichtlich charakteristischer Eigenschaften der mechanischen Schwingungen,
e) Freigeben der Transaktion durch den tragbaren Datenträger (1) sobald durch das Auswerten des Ausgangssignals eine charakteristische Eigenschaft der Schwingungen erkannt wurde.

2. Verfahren nach Anspruch 1, wobei der tragbare Datenträger (1) durch das Erzeugen der mechanischen Schwingungen in Eigenschwingung gebracht wird und diese Eigenschwingung erfasst und ausgewertet wird.

3. Verfahren nach Anspruch 1 oder 2, wobei als charakteristische Eigenschaft die Zeitdauer, die Frequenz oder die Amplitude der mechanischen Schwingung ausgewertet wird.

4. Verfahren nach einem der vorhergehenden Ansprüche, wobei die mechanischen Schwingungen in der Frequenz schwanken und das Frequenzschwanken als charakteristische Eigenschaft im tragbaren Datenträger ausgewertet wird.

5. Verfahren nach einem der vorhergehenden Ansprüche, wobei mehrere mechanische Schwingungen bei der Erzeugung überlagert werden und diese Schwingungsüberlagerung als charakteristische Eigenschaft im tragbaren Datenträger (1) ausgewertet wird.

6. Verfahren nach einem der vorhergehenden Ansprüche, wobei zur Erzeugung der mechanischen Schwingungen der Datenträger (1) an einer Außenfläche des Endgeräts (23) gerieben wird.

7. Tragbarer Datenträger vorgesehen zur Datenübertragung mit einem Endgerät (23) mit
- einem Kartenkörper (10), wobei der Kartenkörper(10)
- einen integrierter Schaltkreis (3) beinhaltet,
- im Inneren an einer Oberseite des Kartenkörpers (10) ein Beschleunigungssensor (4, 5, 6) angebracht ist, wobei der Beschleunigungssensor (4, 5, 6) Ausgangssignale (4a, 5a, 6a) dem integrierten Schaltkreis (3) bereitstellt,
**gekennzeichnet durch**
eine Oberflächenstruktur (8) auf einer Oberseite des Kartenkörpers (10), wobei durch die Oberflächenstruktur (8) mechanische Schwingungen erzeugbar sind, und der Beschleunigungssensor (4, 5, 6) zur Erfassung dieser Schwingungen eingerichtet ist, wodurch die Datenübertragung freigebbar ist.

8. Tragbarer Datenträger nach Anspruch 7, wobei die Oberflächenstruktur (8) oberhalb des Beschleunigungssensors (4, 5, 6) ist.

9. Tragbarer Datenträger nach Anspruch 7 oder 8, wobei der Beschleunigungssensor (4, 5, 6) in einer Aussparung (11) des Kartenkörpers (10) an die Oberseite des Kartenkörpers (10) angebracht ist.

10. Tragbarer Datenträger nach einem der Ansprüche 7 bis 9, wobei die Oberflächenstruktur (8) individuell pro Datenträger (1) gestaltet ist, sodass die mittels der Oberflächenstruktur (8) erzeugbaren Schwingungen individuell pro Datenträger (1) sind.

11. Tragbarer Datenträger nach einem der Ansprüche 7 bis 10, wobei die Oberflächenstruktur (8) aus Rillen besteht und diese Rillen linear, kreisförmig oder wellenartig in der Oberflächenstruktur (8) angeordnet sind.

12. Tragbarer Datenträger nach Anspruch 11, wobei die Rillen unterschiedlich tief sind und über die Oberflächenstruktur (8) verteilt unterschiedliche Abstände zueinander aufweisen.

13. Tragbarer Datenträger nach einem der Ansprüche 7 bis 12, wobei der Beschleunigungssensor (4, 5, 6) individuell pro Datenträger (1) im Kartenkörper (10) platziert ist.

14. System zum Verhindern einer Relay-Attacke umfassend:
- einen tragbaren Datenträger (1) nach einem der Ansprüche 7 bis 13 und
- ein Endgerät (23),
wobei durch die Oberflächenstruktur (8) des tragbaren Datenträgers (1) mechanische Schwingungen erzeugt werden und die Transaktion zwischen Datenträger (1) und Endgerät (23) erst bei Überschreitung eines Sollwerts einer charakteristischen Eigenschaft der mechanischen Schwingung freigegeben wird.

## Claims

1. A method for releasing a transaction between a portable data carrier (1) and an end device (23), having the method steps:
a) bringing the portable data carrier (1) into an electromagnetic field, wherein the end device (23) generates the electromagnetic field, and supplying the portable data carrier (1) with energy from the electromagnetic field,
b) generating mechanical oscillations using a surface structure (8) on the data carrier (1),
c) capturing the mechanical oscillations in the portable data carrier (1) by means of acceleration sensor (4, 5, 6),
d) evaluating an output signal (4a, 5a, 6a) of the acceleration sensor (4, 5, 6) with regard to characteristic properties of the mechanical oscillations,
e) releasing the transaction by the portable data carrier (1) as soon as a characteristic property of the oscillations has been recognized by the evaluating of the output signal.

2. The method according to claim 1, wherein the portable data carrier (1) is set into self-oscillation through the generation of the mechanical oscillations and this self-oscillation is captured and evaluated.

3. The method according to claim 1 or 2, wherein as a characteristic property the time duration, the frequency or the amplitude of the mechanical oscillation is evaluated.

4. The method according to any of the preceding claims, wherein the mechanical oscillations fluctuate in frequency and the frequency fluctuation is evaluated in the portable data carrier as a characteristic property.

5. The method according to any of the preceding claims, wherein several mechanical oscillations are superimposed upon the generation and this oscillation superimposition is evaluated in the portable data carrier (1) as a characteristic property.

6. The method according to any of the preceding claims, wherein for generating the mechanical oscillations the data carrier (1) is rubbed on an outer surface of the end device (3).

7. A portable data carrier provided for the data transmission with an end device (23), having
- a card body (10), wherein the card body (10)
- includes an integrated circuit (3),
- an acceleration sensor (4, 5, 6) is mounted in the interior of the card body (10) at a top side thereof, wherein the acceleration sensor (4, 5, 6) provides output signals (4a, 5a, 6a) to the integrated circuit (3),
**characterized by**
a surface structure (8) on a top side of the card body (10), wherein mechanical oscillations are generatable by the surface structure (8) and the acceleration sensor (4, 5, 6) is adapted to capture these oscillations, thereby making the data transmission releasable.

8. The portable data carrier according to claim 7, wherein the surface structure (8) is above the acceleration sensor (4, 5, 6).

9. The portable data carrier according to claim 7 or 8, wherein the acceleration sensor (4, 5, 6) is mounted to the top side of the card body (10) in a gap (11) of the card body (10).

10. The portable data carrier according to any of claims 7 to 9, wherein the surface structure (8) is configured individually per data carrier (1) so that the oscillations generatable by means of the surface structure (8) are individual per data carrier (1).

11. The portable data carrier according to any of claims 7 to 10, wherein the surface structure (8) consists of grooves and these grooves are arranged linear, circular or wavelike in the surface structure (8).

12. The portable data carrier according to claim 11, wherein the grooves have different depths and have, distributed over the surface structure (8), different spacings.

13. The portable data carrier according to any of claims 7 to 12, wherein the acceleration sensor (4, 5, 6) is placed in the card body (10) individually per data carrier (1).

14. A system for preventing a relay attack, comprising:
- a portable data carrier (1) according to any of claims 7 to 13 and
- an end device (23),
wherein mechanical oscillations are generated by the surface structure (8) of the portable data carrier (1) and the transaction between data carrier (1) and end device (23) is released only when a target value of a characteristic feature of the mechanical oscillation is exceeded.

## Revendications

1. Procédé de déblocage d'une transaction entre un support de données (1) portable et un terminal (23), comprenant les étapes suivantes:
a) introduction du support de données (1) portable dans un champ électromagnétique, le terminal (23) générant le champ électromagnétique, et approvisionnement du support de données (1) portable en énergie provenant du champ électromagnétique,
b) génération de vibrations mécaniques à l'aide d'une structure de surface (8) sur le support de données (1),
c) détection des vibrations mécaniques dans le support de données (1) portable au moyen du capteur d'accélération (4, 5, 6),
d) évaluation d'un signal de sortie (4a, 5a, 6a) du capteur d'accélération (4, 5, 6) quant à des propriétés caractéristiques des vibrations mécaniques,
e) déblocage de la transaction par le support de données (1) portable dès que, par l'évaluation du signal de sortie, une propriété caractéristique des vibrations a été reconnue.

2. Procédé selon la revendication 1, le support de données (1) portable étant, par la génération des vibrations mécaniques, mis en propre vibration, et cette propre vibration étant détectée et évaluée.

3. Procédé selon la revendication 1 ou 2, la propriété caractéristique évaluée étant la durée de temps, la fréquence ou l'amplitude de la vibration mécanique.

4. Procédé selon une des revendications précédentes, les vibrations mécaniques variant en fréquence et la variation de fréquence étant évaluée en tant que propriété caractéristique dans le support de données (1) portable.

5. Procédé selon une des revendications précédentes, plusieurs vibrations mécaniques étant superposées lors de leur génération et cette superposition de vibrations étant évaluée en tant que propriété caractéristique dans le support de données (1) portable.

6. Procédé selon une des revendications précédentes, le support de données (1) étant, pour la génération des vibrations mécaniques, frotté sur une surface extérieure du terminal (23).

7. Support de données (1) portable prévu pour la transmission de données avec un terminal (23), comportant
- un corps de carte (10), le corps de carte (10)
- comportant un circuit intégré (3),
- à l'intérieur à un côté supérieur du corps de carte (10), un capteur d'accélération (4, 5, 6) étant placé, le capteur d'accélération (4, 5, 6) mettant des signaux de sortie (4a, 5a, 6a) à disposition du circuit intégré (3),
**caractérisé par**
une structure de surface (8) sur un côté supérieur du corps de carte (10), des vibrations mécaniques pouvant, moyennant la structure de surface (8), être générées, et le capteur d'accélération (4, 5, 6) étant configuré pour la détection de ces vibrations, ce par quoi la transmission de données est déblocable.

8. Support de données (1) portable selon la revendication 7, la structure de surface (8) étant au-dessus du capteur d'accélération (4, 5, 6).

9. Support de données (1) portable selon la revendication 7 ou 8, le capteur d'accélération (4, 5, 6) étant placé dans un évidement (11) du corps de carte (10) au côté supérieur du corps de carte (10).

10. Support de données portable selon une des revendications de 7 à 9, la structure de surface (8) étant réalisée de façon individuelle par support de données (1), de telle sorte que les vibrations pouvant être générées au moyen de la structure de surface (8) sont individuelles par support de données.

11. Support de données portable selon une des revendications de 7 à 10, la structure de surface (8) consistant en des stries et ces stries étant disposées de manière linéaire, circulaire ou ondulatoire sur la structure de surface (8).

12. Support de données portable selon la revendication 11, les stries étant différemment profondes et présentant à travers la structure de surface (8) différents écartements entre elles.

13. Support de données portable selon une des revendications de 7 à 12, le capteur d'accélération (4, 5, 6) étant positionné dans le corps de carte (10) de façon individuelle par support de données (1).

14. Système d'empêchement d'une attaque de relais, comprenant:
- un support de données (1) portable selon une des revendications de 7 à 13, et
- un terminal (23),
et, moyennant la structure de surface (8) du support de données (1) portable, des vibrations mécaniques étant générées et la transaction entre support de données (1) et terminal (23) n'étant débloquée que quand une valeur prescrite d'une propriété caractéristique de la vibration mécanique est dépassée.
